# EUROPEAN PATENT APPLICATION

(11) **EP 4 573 981 A1**
(43) Date of publication of application: **25.06.2025**
(21) Application number: 23217712.1
(22) Date of filing: 18.12.2023
(51) Int. Cl.: A47J 31/06, A47J 31/36, A47J 31/42

(54) **GUIDED DISPLACEMENT OF A PORTAFILTER IN A COFFEE MACHINE**

(71) Applicant: Versuni Holding B.V., 5656 AE Eindhoven (NL)
(72) Inventor: VAN TOOR, Johannes Hendrikus, 5656 AE Eindhoven (NL); WESTRUP, Geert Hendrik, 5656 AE Eindhoven (NL); RIJSKAMP, Peter, 5656 AE Eindhoven (NL); DE LANGE, Maarten, 5656 AE Eindhoven (NL); MATTHIJSSEN, Tijn, 5656 AE Eindhoven (NL)
(74) Representative: Vollering, Stefanus Franciscus Maria

(57) **Abstract**

A coffee machine is provided, comprising a main unit and a portafilter (20), wherein the portafilter (20) in a functional condition is removably mounted to the main unit. When the portafilter (20) is in the functional condition, displacement of the portafilter (20) between a coffee receiving position and a brewing position takes place along a guide path, for instance a curved guide path. Such a guide path may for instance be defined by a rail-like component (12). A portafilter carrier (24) may be provided for receiving and accommodating the portafilter (20) in the functional condition. In such case, actions of mounting the portafilter (20) to the main unit and removing the portafilter (20) from the main unit can be done via a linear movement of the portafilter (20) towards the main unit and away from the main unit, respectively.

## Description

### FIELD OF THE INVENTION

The invention relates to a coffee machine, comprising a main unit comprising a main housing accommodating a ground coffee supply unit including a ground coffee outlet and a brew water supply unit including a brew water outlet; and a portafilter configured to be put to a functional condition in which the portafilter is removably combined with the main unit.

### BACKGROUND OF THE INVENTION

It is well known that coffee made from freshly ground beans gives better quality than pre-ground coffee. Often, fresh beans are used when making espresso coffee.

There are many different types of commercially available espresso coffee machine, for use in the home, or in bars, restaurants and hotels. The answer to the question which type of machine is appropriate in a particular setting depends on the expected amount of use, and of course also on the budget.

In a manually operated espresso machine, a user fills a coffee receiving vessel referred to as portafilter with coffee grounds. The user then tamps the coffee grounds in the portafilter with sufficient pressure, such as a pressure of about 200 N, to create a so-called puck in the portafilter. Subsequently, the user mounts the portafilter to the main unit of the coffee machine, usually through a bayonet-type of connection. The coffee machine is operated to drive hot water through the puck in the portafilter and the coffee that is obtained in this way is dispensed via a spout that is typically integrated in the portafilter. After brewing, the user needs to disconnect the portafilter from the main unit and empty the portafilter, throwing away the used coffee grounds. In a bar setting, the manual process is conducted by the barista. In a domestic setting, the manual process makes the user feel involved in the coffee making process, and hence provides the user with a feeling of performing the role of a barista.

Manually operated espresso machines with an integrated grinder are known in the art. In the case of such machines, a user is supposed to switch the portafilter between a first position relative to the main housing for receiving ground coffee and a second position relative to the main housing for brewing coffee. Tamping may be done manually or via a manually operated lever of the machine.

In a fully automatic espresso machine, all of the above-mentioned steps are done automatically, in one and the same machine. The machine comprises a bean container and a grinder to make the coffee grounds. These grounds are transported into a brew chamber and tamped automatically, by means of a piston that may be hydraulically or mechanically actuated such as by means of an electromotor. Next, hot water is driven through the coffee grounds in the brew chamber, coffee is brewed and dispensed in a receptacle, and the used coffee grounds are discharged from the brew chamber into a waste bin within the machine. Thus, in the case of fully automatic espresso machines, the manual steps required in the case of a manually operated espresso machine are removed, which saves time. Moreover, more uniform results are ensured.

A manually operated espresso machine can be produced at lower cost than a fully automatic espresso machine. Also, a manually operated espresso machine requires less maintenance than a fully automatic espresso machine, mainly because there may be less waste water in the drip tray and the coffee puck is removed after every coffee brewing action by the user. However, the results of using a manually operated espresso machine may be less uniform, due to the user involvement in the processes of filling the portafilter and tamping the coffee grounds in the portafilter into a puck. A fully automatic espresso machine gives more consistent results, but using a fully automatic espresso machine removes the barista feel associated with using a manually operated espresso machine. A fully automatic espresso machine generally is also more complex, more expensive, and bigger than a manually operated espresso machine.

A third type of coffee machine has been proposed, particularly a type which combines aspects from the manually operated espresso machine and the fully automatic espresso machine. In the present text, this third type of coffee machine is referred to as hybrid coffee machine. For example, US 9,125,519 B2 relates to a coffee machine that is equipped with a removable portafilter, and that also comprises a grinder at an interior position in the main unit of the coffee machine and configured to load the portafilter in the functional condition on the main unit with coffee powder from the top. Further, a lid or a plunger is present in the main unit to close the portafilter in the main unit and to tamp the coffee powder in the portafilter. The portafilter as closed by the lid or plunger functions as the brew chamber. After brewing, the emptying of the portafilter needs to be done manually again. Thus, an extensive mechanism as known from fully automatic espresso machines is omitted while the operating effort is not significantly increased compared to a need to periodically empty and clean a waste bin for the coffee grounds. The coffee machine may particularly comprise a distribution filter element that can be moved back and forth between a position in which the portafilter is open and can be filled with coffee powder and a second position in which the distribution filter element closes the portafilter in a pressure-tight manner. To move the distribution filter element between the first and second position an electrically or hydraulically operating drive unit can be used. The distribution filter element is embodied constructively for introducing the pressurized hot water into the portafilter and can also be useful for tamping the coffee powder as present in the portafilter into the necessary puck.

As mentioned, the hybrid coffee machine combines aspects from the manually operated espresso machine and the fully automatic espresso machine. In fact, as follows from the description of the hybrid coffee machine known from US 9,125,519 B2, the user of the hybrid coffee machine only needs to connect the empty portafilter to the main unit of the coffee machine. Grinding of the coffee beans, dosing of the ground coffee in the portafilter, and tamping of the ground coffee take place in an automated manner as in a fully automatic espresso machine, and also brew water delivery and coffee dispensing are fully automated actions. After brewing, the user needs to disconnect the portafilter from the main unit and discharge the coffee waste, similar to what is known from the context of manually operated espresso machines.

Relating to a coffee machine comprising a main unit and a removable portafilter, and also a ground coffee supply unit and a brew water supply unit accommodated in a main housing of the main unit, the invention is in the field of hybrid coffee machines. It is an object of the invention to provide a coffee machine of uncomplicated and compact design, which can be easily and intuitively controlled by a user in such a way that the user can have an experience that is comparable to the real barista experience.

### SUMMARY OF THE INVENTION

The invention provides a coffee machine, comprising: a main unit comprising a main housing accommodating a ground coffee supply unit including a ground coffee outlet and a brew water supply unit including a brew water outlet; and a portafilter configured to be put to a functional condition in which the portafilter is removably combined with the main unit; wherein: the portafilter in the functional condition is displaceable relative to the main housing; with the portafilter at a first position relative to the main housing (hereinafter also referred to as coffee receiving position), the portafilter and the ground coffee outlet are at a relative position at which the portafilter is enabled to receive ground coffee from the ground coffee outlet; with the portafilter at a second position relative to the main housing (hereinafter also referred to as brewing position), the portafilter and the brew water outlet are at a relative position at which the portafilter is enabled to receive brew water from the brew water outlet; and the coffee machine further comprises a guiding arrangement that is configured to guide displacement of the portafilter between the first position relative to the main housing and the second position relative to the main housing along a guide path.

It follows from the above definition that in the coffee machine according to the invention, the portafilter in the functional condition is displaceable relative to the main housing. One position of the portafilter relative to the main housing is a first position relative to the main housing in which the portafilter and the ground coffee outlet are at a relative position at which the portafilter is enabled to receive ground coffee from the ground coffee outlet, while another position of the portafilter relative to the main housing is a second position relative to the main housing in which the portafilter and the brew water outlet are at a relative position at which the portafilter is enabled to receive brew water from the brew water outlet. The coffee machine further comprises a guiding arrangement that is configured to guide displacement of the portafilter between the first position relative to the main housing and the second position relative to the main housing along a guide path.

The location of the ground coffee supply unit may be spaced away, in horizontal direction, from the location of the brew water supply unit. More specifically, the location of the ground coffee outlet of the ground coffee supply unit may be spaced away, in horizontal direction, from the location of the brew water outlet of the brew water supply unit. As a result, the coffee receiving position (first position of the portafilter relative to the main housing) may be spaced way, in horizontal direction, from the brewing position (second position of the portafilter relative to the main housing). Thus, to go from the first to the second position, and vice versa, the portafilter needs to bridge a horizontal distance. According to the invention, this can be done without the portafilter having to be demounted from the first position and reinstalled at the second position. Instead, the portafilter needs to be installed ones, at the start of a new brew cycle. Once put into its functional position, the portafilter is then displaceable between the first and second position by means of the guiding arrangement. The guiding arrangement is configured to guide displacement of the portafilter between the respective positions along a guide path, without demounting/ re-mounting of the portafilter being needed.

Thanks to the guiding arrangement, an easy and intuitive way of displacing the portafilter in the functional condition relative to the main housing is obtained. This is especially advantageous when at least part of the displacement involved in a coffee making process is to be done manually. For example, it may be so that the main unit is configured to receive the portafilter at the second position relative to the main housing in the instance that the portafilter is put to the functional condition. This means that during a coffee making process, the portafilter is to be displaced from the second position relative to the main housing to the first position relative to the main housing in a first displacement action, and from the first position relative to the main housing back to the second position relative to the main housing in a second displacement action. In such a case, it is advantageous if at least the first displacement action is a user action. This first displacement action can be performed by the user immediately after having put the portafilter to the functional condition and may provide the user with a feeling of actively initiating the coffee making process.

The way in which the portafilter is guided by the guiding arrangement can be such that displacement of the portafilter between the first position relative to the main housing and the second position relative to the main housing requires a simple sideward displacement. To that end, the guide path may be a linear (straight) guide path. Alternatively, the guide path may be a curved guide path. For example, the guide path may be shaped like a circle segment. Preferably, the guiding arrangement is configured such that displacement of the portafilter between the first position relative to the main housing and the second position relative to the main housing is experienced by the user as a simple sideward displacement of the portafilter (e.g. to the right or to the left relative to the main housing) while in reality the guide path may be curved. In this respect, it is advantageous if an axis of curvature of the curved guide path is substantially vertical in a normal, operational orientation of the main unit. It may further be advantageous if the guide path is substantially horizontal in a normal, operational orientation of the main unit, so that it is achieved that a vertical position of the portafilter is the same in all possible positions relative to the main housing.

In the context of the invention, numerous embodiments of the guiding arrangement are possible. According to one practical example, the guiding arrangement comprises a rail-like component defining the guide path.

It is possible that the coffee machine according to the invention comprises a portafilter carrier configured to receive and accommodate the portafilter in the functional condition. An advantage of having a portafilter carrier as mentioned is that the portafilter carrier can be designed with all the features as necessary to enable all positioning options and any other functionalities of the portafilter as desired so that there is no need to provide the portafilter itself with those features. As a result, the portafilter may be of simple, robust design, devoid of fragile or sensitive element(s), which might otherwise constitute a hindrance to using and manipulating the portafilter, especially when the portafilter is in a removed condition. If the coffee machine comprises a portafilter carrier indeed, and the guiding arrangement comprises a rail-like component defining the guide path as suggested in the foregoing, it is practical if the portafilter carrier is arranged to run on the rail-like component.

Another advantage of making use of a portafilter carrier is found in a possibility to realize a high degree of ease of insertion of the portafilter, practically without risk of wrong or unstable insertion, especially since the traditional bayonet-type of connection for mounting the portafilter to the main unit can be omitted. According to one feasible option, the portafilter carrier is configured to enable the portafilter to be put in place in the portafilter carrier by means of a linear sliding movement. Such linear sliding movement may particularly be a movement in a direction that is perceived by the user as a forward direction, while the movement aimed at displacing the portafilter in the functional condition can be such that this movement is (or is perceived as) a sideward movement, as explained earlier. When it comes to realizing the option of the linear sliding movement, various ways of putting this option to practice can be chosen. For example, it is possible that use is made of a groove-pin connection, wherein the portafilter carrier comprises one of a groove and a pin of a groove-pin connection set, and wherein the portafilter comprises the other of the groove and the pin of the groove-pin connection set.

In any case, it is advantageous if the portafilter carrier comprises a releasable locking mechanism configured to lock the portafilter in place on the portafilter carrier, such as a mechanism comprising a snap finger or a locking spring. Having such a locking mechanism may provide tactile feedback to a user thus helping the user in knowing when the portafilter has been placed correctly in the portafilter carrier, It may also contribute to stability and thereby to safety. Another notable option when it comes to stability and safety is an option according to which the coffee machine comprises a holding mechanism configured to hold the portafilter at the first position relative to the main housing, which holding mechanism may be actuable under the influence of the portafilter being put to the first position relative to the main housing.

During operation of the coffee machine for performing a coffee making process, an action of supplying ground coffee to the portafilter can be performed when the portafilter is at the first position relative to the main housing. In this respect, it is possible that the user is requested to activate the coffee machine in a separate step to perform the action, such as through pressing a button or interacting with a touch screen. Alternatively, it is possible that the coffee machine comprises an arrangement that is actuable under the influence of the portafilter being put to the first position relative to the main housing to initiate supply of ground coffee to the portafilter through the ground coffee outlet. In other words, it is possible that with the portafilter being at the appropriate position, namely the first position relative to the main housing, the action of supplying ground coffee to the portafilter is initiated automatically. To that end, the coffee machine may be equipped with a suitable sensor arrangement, for example a Hall sensor or an optical sensor. A purely mechanical arrangement (e.g. a mechanical switch) is also feasible.

After the action of supplying ground coffee to the portafilter has taken place, the portafilter is ready to be displaced from the first position relative to the main housing to the second position relative to the main housing. The coffee machine can be configured to only enable manual displacement of the portafilter. Alternatively, the coffee machine may comprise a driving mechanism configured to bring about at least part of the displacement of the portafilter, such as a driving mechanism configured to bring about displacement of the portafilter from the first position relative to the main housing to the second position relative to the main housing. In any case, once the portafilter is at the second position relative to the main housing, the actions of creating the coffee puck by tamping the ground coffee in the portafilter and supplying brew water to the puck can be performed. In this respect, it is possible that the user is requested to activate the coffee machine in at least one separate step to perform the actions, such as through pressing a button or interacting with a touch screen. Alternatively, it is possible that the coffee machine comprises an arrangement that is actuable under the influence of the portafilter being put to the second position relative to the main housing to initiate supply of brew water to the portafilter through the brew water outlet, and possibly also to initiate the preceding tamping action. In other words, it is possible that with the portafilter being at the appropriate position, namely the second position relative to the main housing, at least the action of brewing coffee at the position of the portafilter is initiated automatically. To that end, the coffee machine may be equipped with a suitable sensor arrangement, like aforementioned optical sensor or Hall sensor. A purely mechanical arrangement such as a switch is also feasible.

Thus, according to one embodiment of a coffee machine according to the invention, a user may simply initialize a brew cycle by bringing the portafilter into the first position relative to the main housing. The remainder of the brew cycle (grinding, delivery of ground coffee into the portafilter, displacement of the portafilter from the first position to the second position relative to the main housing, creating the coffee puck by tamping the ground coffee in the portafilter and brewing coffee by supplying brew water to the puck) may then be automatically performed, without further user involvement being needed. In such case, the portafilter can have a user interface functionality, wherein a user action of bringing the portafilter into the first position may initiate a new brewing cycle, or at least the ground coffee supply unit, e.g. the grinder.

In the above-mentioned case that the coffee machine comprises a driving mechanism configured to bring about displacement of the portafilter from the first position relative to the main housing to the second position relative to the main housing, it is possible that the driving mechanism comprises a biasing mechanism that is actuable under the influence of the portafilter being displaced, for instance from the second position relative to the main housing to the first position relative to the main housing. Thus, when the initial position of the portafilter relative to the main housing is the second position relative to the main housing, the biasing mechanism is actuated during the time that the portafilter is displaced from the second position relative to the main housing to the first position relative to the main housing for the purpose of receiving ground coffee. At the time that the portafilter is ready to be displaced to the second position relative to the main housing for the purpose of brewing coffee, the displacement can be done automatically by action of the biasing mechanism. An example of the biasing mechanism is a mechanism comprising a spring. Advantageously, the biasing mechanism may include a damper to avoid abrupt movements of the portafilter, which otherwise might result in an uneven distribution of ground coffee in the portafilter. It is practical if the driving mechanism is configured to interact with the portafilter in a mechanical fashion, possibly through the portafilter carrier in case a portafilter carrier is applied. In case the coffee machine is equipped with the driving mechanism comprising the biasing mechanism, indeed, it is most practical to have the holding mechanism mentioned earlier, so that the portafilter can be held at the coffee receiving position at least as long as a supply of ground coffee to the portafilter lasts.

The coffee machine is without components configured to enable automatic discharge of a used coffee puck from the portafilter. As explained earlier, the user is supposed to remove the portafilter from the main housing and empty the portafilter. An embodiment of the portafilter in which the portafilter comprises a filter basket and a handle extending outwardly from the filter basket is commonly known. By holding the portafilter at the position of the handle, the user is capable of manipulating the portafilter in a convenient and easy manner. This also applies to any user action as may be needed in displacing the portafilter in the functional condition relative to the main housing.

Advantageously, the coffee machine comprises a blocking arrangement that is configured to allow the portafilter to be in the first position relative to the main housing only one time after having been combined with the main unit. In that way, a situation in which the user accidentally moves the portafilter to the first position relative to the main housing after a coffee making process has been performed is avoided, so that it cannot happen that a fresh amount of ground coffee is deposited on top of a used puck. Using the blocking arrangement may help the user in realizing that the portafilter needs to be removed from the main unit and emptied. In a practical example, the blocking arrangement may comprise a blocking mechanism configured to mechanically block a path for the portafilter towards the first position relative to the main housing in an actuated condition and to leave the path open in a default condition. Such a blocking mechanism may be configured to mechanically interact with the portafilter to assume the actuated condition when the portafilter is at the first position relative to the main housing or during movement of the portafilter away from the first position relative to the main housing. Alternatively, it is possible that the blocking arrangement comprises a setting mechanism configured to only set the actuated condition of the blocking mechanism when the portafilter is at the first position relative to the main housing or during movement of the portafilter away from the first position relative to the main housing, which setting mechanism may comprise an electronic detection circuit, for example.

Further practical options relating to the coffee machine according to the invention include the following: 1) the coffee machine comprises a closing and tamping system configured to close the portafilter and to provide tamping of ground coffee contained in the portafilter, and arranged to interact with the portafilter while or after the portafilter is displaced from the first position relative to the main housing to the second position relative to the main housing; the closing and tamping system may comprise a piston. The piston may comprise the brew water outlet. The piston may be hydraulically or mechanically actuated; and 2) the ground coffee supply unit comprises a grinder. The ground coffee supply unit may further comprise a coffee bean reservoir.

It is to be noted that a number of features presented as options in the foregoing can be applied independently from the feature of the coffee machine comprising a guiding arrangement that is configured to guide displacement of the portafilter between the first position relative to the main housing and the second position relative to the main housing along a guide path. In view thereof, the invention also relates to coffee machines which are defined without the guiding arrangement, as will be made explicit in the following.

In the first place, the invention also relates to a coffee machine according to the following definition: a coffee machine, comprising: a main unit comprising a main housing accommodating a ground coffee supply unit including a ground coffee outlet and a brew water supply unit including a brew water outlet; and a portafilter configured to be put to a functional condition in which the portafilter is removably combined with the main unit; wherein: the portafilter in the functional condition is displaceable relative to the main housing; with the portafilter at a first position relative to the main housing, the portafilter and the ground coffee outlet are at a relative position at which the portafilter is enabled to receive ground coffee from the ground coffee outlet; with the portafilter at a second position relative to the main housing, the portafilter and the brew water outlet are at a relative position at which the portafilter is enabled to receive brew water from the brew water outlet; and the coffee machine further comprises a portafilter carrier configured to receive and accommodate the portafilter in the functional condition.

Optionally, the portafilter carrier is configured to enable the portafilter to be put in place in the portafilter carrier by means of a linear sliding movement (as opposed to a rotary sliding movement as known from bayonet type portafilters). Removal of the portafilter from the portafilter carrier may likewise take place via a linear sliding movement.

Optionally, a locking mechanism may be provided, configured to become activated by the linear sliding movement during insertion of the portafilter, to lock the portafilter in place on the portafilter carrier. The locking mechanism may for instance include a spring or resilient finger and a recess. One of the spring (or resilient finger) and recess may be arranged on the portafilter carrier. The other one of the spring (or resilient finger) and recess may be arranged on the portafilter. Thus, during insertion of the portafilter in the portafilter carrier, more precisely, during the linear sliding movement of the portafilter relative to the portafilter, the spring (or resilient finger) may snap into the recess. Preferably, the locking mechanism is releasable, e.g. by linear sliding movement of the portafilter in the opposite direction, during removal of the portafilter from the portafilter carrier.

The locations of the ground coffee supply unit and the water supply unit may be horizontally spaced from each other. In such case, the portafilter carrier may be arranged to allow sideways displacement of the portafilter from the coffee receiving position (first position) to the brewing position (second position). The movement of the portafilter carrier may be a linear movement or a curved movement. Preferably, it may be experienced by the user as a simple sideways displacement of the portafilter. Thus the portafilter can be manipulated via simple, intuitive, hassle free movements. The portafilter can be inserted, respectively removed from the coffee machine via a simple linear slide-in, respectively slide-out movement. Once inserted, it can be moved between the coffee receiving position and the brew position via simple sideways displacements, without any demounting or re-insertion of the portafilter being needed. Instead, the portafilter merely has to be inserted once at the start of the brew cycle, and removed once at the end of the brew cycle.

In the second place, the invention also relates to a coffee machine according to the following definition: a coffee machine, comprising: a main unit comprising a main housing accommodating a ground coffee supply unit including a ground coffee outlet and a brew water supply unit including a brew water outlet; and a portafilter configured to be put to a functional condition in which the portafilter is removably combined with the main unit; wherein: the portafilter in the functional condition is displaceable relative to the main housing; with the portafilter at a first position relative to the main housing (hereinafter also referred to as coffee receiving position), the portafilter and the ground coffee outlet are at a relative position at which the portafilter is enabled to receive ground coffee from the ground coffee outlet; with the portafilter at a second position relative to the main housing (hereinafter also referred to as brewing position), the portafilter and the brew water outlet are at a relative position at which the portafilter is enabled to receive brew water from the brew water outlet; and the main unit is configured to receive the portafilter at the second position relative to the main housing in the instance that the portafilter is put to the functional condition.

In the third place, the invention also relates to a coffee machine according to the following definition: a coffee machine, comprising: a main unit comprising a main housing accommodating a ground coffee supply unit including a ground coffee outlet and a brew water supply unit including a brew water outlet; and a portafilter configured to be put to a functional condition in which the portafilter is removably combined with the main unit; wherein: the portafilter in the functional condition is displaceable relative to the main housing; with the portafilter at a first position relative to the main housing, the portafilter and the ground coffee outlet are at a relative position at which the portafilter is enabled to receive ground coffee from the ground coffee outlet; with the portafilter at a second position relative to the main housing, the portafilter and the brew water outlet are at a relative position at which the portafilter is enabled to receive brew water from the brew water outlet; wherein the main unit is configured to receive the portafilter at the first or the second position relative to the main housing in the instance that the portafilter is put to the functional condition, and wherein the portafilter has a user interface functionality wherein a user action of displacing the portafilter from the second position relative to the main housing to the first position relative to the main housing is used to automatically activate the ground coffee supply unit and/or wherein a user action of displacing the portafilter from the first position relative to the main housing to the second position relative to the main housing is used to automatically activate an action of creating the coffee puck by tamping the ground coffee in the portafilter and/or supplying brew water to the puck.

In the fourth place, the invention also relates to a coffee machine according to the following definition: a coffee machine, comprising: a main unit comprising a main housing accommodating a ground coffee supply unit including a ground coffee outlet and a brew water supply unit including a brew water outlet; and a portafilter configured to be put to a functional condition in which the portafilter is removably combined with the main unit; wherein: the portafilter in the functional condition is displaceable relative to the main housing; with the portafilter at a first position relative to the main housing, the portafilter and the ground coffee outlet are at a relative position at which the portafilter is enabled to receive ground coffee from the ground coffee outlet; with the portafilter at a second position relative to the main housing, the portafilter and the brew water outlet are at a relative position at which the portafilter is enabled to receive brew water from the brew water outlet; and the coffee machine further comprises a holding mechanism configured to hold the portafilter at the first position relative to the main housing, wherein optionally the holding mechanism is actuable under the influence of the portafilter being put to the first position relative to the main housing.

In the fifth place, the invention also relates to a coffee machine according to the following definition: a coffee machine, comprising: a main unit comprising a main housing accommodating a ground coffee supply unit including a ground coffee outlet and a brew water supply unit including a brew water outlet; and a portafilter configured to be put to a functional condition in which the portafilter is removably combined with the main unit; wherein: the portafilter in the functional condition is displaceable relative to the main housing; with the portafilter at a first position relative to the main housing, the portafilter and the ground coffee outlet are at a relative position at which the portafilter is enabled to receive ground coffee from the ground coffee outlet; with the portafilter at a second position relative to the main housing, the portafilter and the brew water outlet are at a relative position at which the portafilter is enabled to receive brew water from the brew water outlet; and the coffee machine further comprises a driving mechanism configured to bring about displacement of the portafilter from the first position relative to the main housing to the second position relative to the main housing, the driving mechanism comprising a biasing mechanism that is actuable under the influence of the portafilter being displaced from the second position relative to the main housing to the first position relative to the main housing. For instance, when the portafilter is displaced through user action, e.g. from the second position relative to the main housing to the first position relative to the main housing, kinematic energy supplied by the user during said user action may be stored in a mechanical buffer, such as a spring or the like. This kinematic energy may be released later, for subsequent displacement of the portafilter, for instance to automatically return the portafilter to the second position relative to the main housing.

The above-described and other aspects of the invention will be apparent from and elucidated with reference to the following detailed description of a practical embodiment of a coffee machine comprising a main unit and a portafilter that is to be combined with the main unit for the purpose of realizing a coffee making process (in this description also referred to as brew cycle) by means of the coffee machine, and that is to be removed from the main unit after a coffee making process has taken place.

### BRIEF DESCRIPTION OF THE DRAWINGS

The invention will now be explained in greater detail with reference to the figures, in which equal or similar parts are indicated by the same reference signs, and in which:
Figure 1 diagrammatically shows a perspective view of a coffee machine according to an embodiment of the invention, including a main unit and a portafilter, wherein a functional condition of the portafilter is illustrated;
Figure 2 illustrates how the portafilter is put to the functional condition and how the portafilter in the functional condition is displaced relative to a main housing of the main unit;
Figure 3 illustrates a hydraulic layout of the coffee machine;
Figure 4 diagrammatically shows a perspective view of a portion of the coffee machine including a portafilter carrier and a curved guide track;
Figure 5 diagrammatically shows a perspective view of the portion of the coffee machine shown in figure 4, with the portafilter at an insertion position relative to the main housing;
Figure 6 diagrammatically shows a perspective view of the portion of the coffee machine shown in figures 4 and 5, with the portafilter at a position relative to the main housing for receiving ground coffee from a coffee supply unit of the coffee machine;
Figure 7 diagrammatically shows a perspective view of a component of the coffee machine including the guide track;
Figure 8 diagrammatically shows a perspective view of the portafilter carrier;
Figure 9 diagrammatically shows a perspective view of the portafilter;
Figure 10 diagrammatically shows a bottom view of a portion of the coffee machine including a driving mechanism for driving the portafilter, with the portafilter at the position relative to the main housing for receiving ground coffee from a coffee supply unit of the coffee machine;
Figures 11 and 12 show a first alternative to using the portafilter carrier and the guide track, with the portafilter in two different positions relative to the main housing; and
Figures 13 and 14 show a second alternative to using the portafilter carrier and the guide track, with the portafilter in two different positions relative to the main housing.

### DETAILED DESCRIPTION OF EMBODIMENTS

The invention relates to a coffee machine 100, and the figures show an embodiment of the coffee machine 100 and portions and components of the coffee machine 100 according to this embodiment, and also illustrate working principles of the coffee machine 100. The coffee machine 100 comprises a main unit 10 and a portafilter 20. The main unit 10 comprises a main housing 11 accommodating a ground coffee supply unit 30 including a ground coffee outlet 31 and a brew water supply unit 40 including a brew water outlet 41. In the present embodiment of the coffee machine 100, the ground coffee supply unit 30 further includes a coffee bean reservoir 32 and a grinder 33, and the brew water supply unit 40 further includes a heater 42 and a fluid coupling 43 between the heater 42 and the brew water outlet 41, which will hereinafter be referred to as delivery fluid coupling 43. The heater 42 may be of any suitable type, such as a flow through heater, a thermoblock, a thick film heater, etc. and the delivery fluid coupling 43 may comprise a system of conduits. The brew water outlet 41 may be in the form of a suitable water delivery head arranged at an end of a conduit of the delivery fluid coupling 43, for example, which water delivery head may comprise a water distribution disc or the like.

The portafilter 20 is intended to be used in two conditions, namely a functional condition in which the portafilter 20 is removably combined with the main unit 10, and a removed condition in which the portafilter 20 is separate from the main unit 10. In view thereof, the portafilter 20 is also referred to as exterior portafilter. If a user of the coffee machine 100 intends to operate the coffee machine 100 for the purpose of making a coffee drink, it is necessary that the user takes action aimed at putting the portafilter 20 in the functional condition if the portafilter 20 is found to be in the removed condition. The portafilter 20 comprises a filter basket 21 and a handle 22 extending outwardly from the filter basket 21.

In the present embodiment, the coffee machine 100 further comprises a water reservoir 50, a flow meter 51, a pump 52, a fluid coupling 53 between the reservoir 50 and the flow meter 51, a fluid coupling 54 between the flow meter 51 and the pump 52, and a fluid coupling 55 between the pump 52 and the heater 42. Also, the coffee machine 100 comprises a controller 60 configured to control operation of the coffee machine 100.

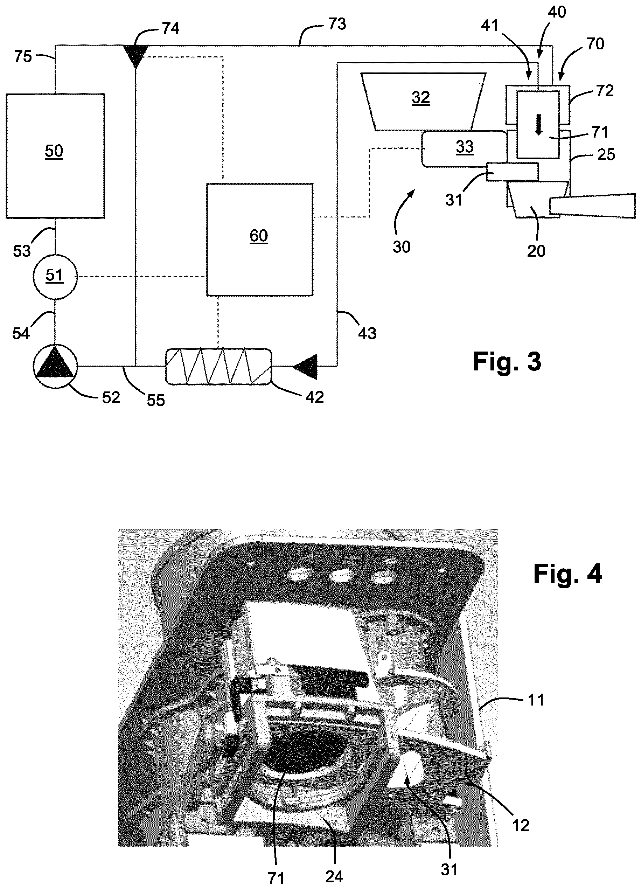

The pump 52 may be of any suitable type. The flow meter 51 is functional to provide a flow measurement to the controller 60, and the controller 60 is configured to control the heater 42 and the pump 52 on the basis of input from the flow meter 51 for the purpose of realizing a coffee making process in a proper manner. Alternatively, the flow meter 51 is omitted and dosing and flow rate control are done through appropriate control of the pump 52, such as by setting a power level and a pump time. In figure 3, control signals between the controller 60 and a number of components of the coffee machine 100 are represented through dashed lines.

The coffee machine 100 is designed such that when the portafilter 20 is in the functional condition, the portafilter 20 can be displaced between different positions relative to the main housing 11, including a position involving a relative position of the portafilter 20 and the ground coffee outlet 31 at which the portafilter 20 is enabled to receive ground coffee from the ground coffee outlet 31, and a position involving a relative position of the portafilter 20 and the brew water outlet 41 at which the portafilter 20 is enabled to receive brew water from the brew water outlet 41. For the sake of completeness, it is noted that in the above-described practical case of the portafilter 20 comprising a filter basket 21 and a handle 22, the filter basket 21 is the component of the portafilter 20 that is relevant in this respect. In the following, the first position of the portafilter 20/ filter basket 21 relative to the main housing 11 will be referred to as coffee receiving position of the portafilter 20, and the second position of the portafilter 20/ filter basket 21 relative to the main housing 11 will be referred to as brewing position of the portafilter 20. The coffee machine 100 of the shown embodiment is of the type comprising a closing and tamping system 70 for closing the portafilter 20/filter basket 21 when the portafilter is in the brewing position and for compacting ground coffee in the portafilter 20/filter basket 21 by means of a piston 71 that is arranged in a holder 72 so as to be movable in an up and down direction, and that is dimensioned to fit in the filter basket 21. In the shown example, the piston 71 is hydraulically connected to the pump 52 through a fluid coupling 73 and a valve 74 that may normally be closed and be opened when tamping is to take place. The valve 74 may be actively controlled by the controller 60 or may be a passive valve reacting to pressure. Further, a drain fluid coupling 75 may be present between the valve 74 and the water reservoir 50 to enable a return of water to the water reservoir 50 when the piston 71 is to be retracted. A downward movement of the piston 71 is indicated in figure 3 by an arrow. It is not essential that the piston 71 is hydraulically driven by the pump 52 that is present for the purpose of the coffee making functionality of the coffee machine 100, although this is practical in view of costs and also compactness of the coffee machine 100. Alternatively, another way of driving the piston 71 may be applied, e.g. via a motor or manually operable lever. An embodiment of the coffee machine 100 in which the piston 71 is also driven hydraulically yet by means of a second pump is also feasible.

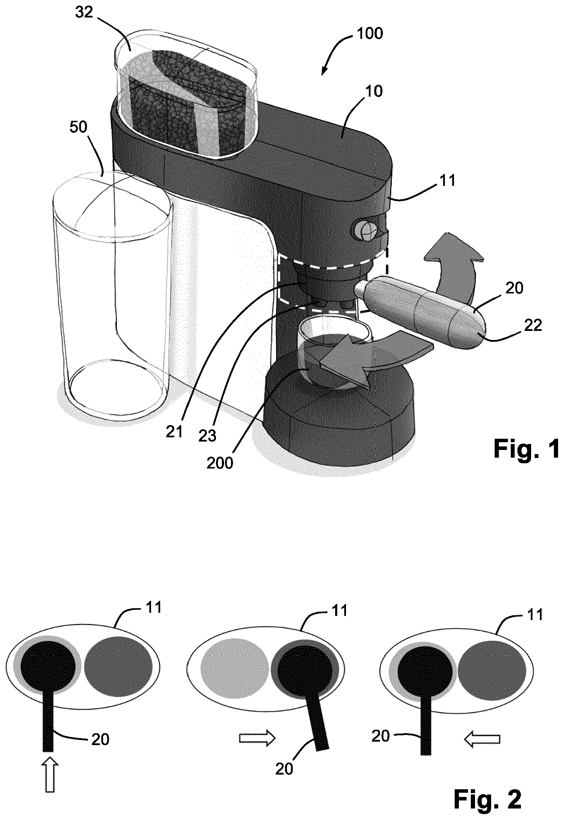

As mentioned, the portafilter 20 can be displaced between different positions relative to the main housing 11. In figure 2, the coffee receiving position of the portafilter 20 is shown in the centre of the figure, and the brewing position of the portafilter 20 is shown at the right side of the figure. Further, at the left side of figure 2, it is illustrated that the brewing position may also be a position at which the portafilter 20 is to be initially placed in/on the main unit 10 by the user. It may further be the position at which the portafilter 20 is to be removed from the main unit 10. At the left side of figure 2, a direction of placement of the portafilter 20 is indicated by an arrow. In the centre of figure 2, an arrow indicates a direction of displacement from the brewing position to the coffee receiving position, and at the right side of figure 2, an arrow indicates a direction of displacement from the coffee receiving position to the brewing position. In figure 1, a direction of displacement of the portafilter 20 from the brewing position to the coffee receiving position and the opposite direction of displacement of the portafilter 20 from the coffee receiving position to the brewing position are indicated by arrows. For the sake of clarity, a docking area of the main housing 11 for receiving and accommodating the portafilter 20 in the functional condition is not shown in figure 1 so that the portafilter 20 can be seen. Only a contour of the docking area is indicated by dashed lines.

In view of the foregoing, using the coffee machine 100 to make coffee involves the following actions:
- user actions aimed at ensuring that there is a sufficient quantity of coffee beans in the coffee bean reservoir 32, that there is a sufficient quantity of water in the water reservoir 50, and that the portafilter 20 is clean and does not contain any coffee residue,
- a user action aimed at ensuring that the portafilter 20 is in the functional condition and at the brewing position,
- a user action or an automated action aimed at putting the portafilter 20 from the brewing position to the coffee receiving position, wherein it is noted that in case a user action is applicable, this only requires taking hold of the handle 22 of the portafilter 20 and manipulating the handle 22 so that the portafilter 20 is made to move in the direction towards the coffee receiving position,
- a user action or an automated action of activating the ground coffee supply unit 30 to grind a quantity of coffee beans and supply the ground coffee thus obtained to the portafilter 20/filter basket 21 through the ground coffee outlet 31,
- a user action or an automated action aimed at putting the portafilter 20 filled with ground coffee from the coffee receiving position to the brewing position, wherein it is noted that in case a user action is applicable, this only requires taking hold of the handle 22 of the portafilter 20 and manipulating the handle 22 so that the portafilter 20 is made to move in the direction towards the brewing position,
- a user action or an automated action of activating the closing and tamping system 70 to close the portafilter 20/filter basket 21 in order to thereby create a brew chamber, and to compact the ground coffee in the portafilter 20, and
- a user action or an automated action of activating the pump 52 and, optionally, the heater 42 so that water is supplied in a pressurized and possibly heated condition to the brew chamber through the brew water outlet 41 so that a coffee brewing action takes place in the brew chamber.

As illustrated in figure 1, it is practical if the portafilter 20 is equipped with a lower spout 23 at the position of the filter basket 21 so that freshly brewed coffee may be dispensed directly from the portafilter to a receptacle 200 such as a cup or glass placed at a position underneath the portafilter 20.

The coffee machine 100 is devoid of components configured to enable automatic discharge of a used coffee puck from the portafilter 20. This means that the user is supposed to remove the portafilter 20 from the main unit 10 after the coffee making process has ended, and to empty and preferably clean the portafilter 20. The portafilter 20 may be provided with ejection means for easy removal of the used puck from the filter basket 21. Such ejection means are known per se.

Ease of use of the coffee machine 100 may be obtained if most or all of the above actions which can be automated actions are automated actions indeed. The controller 60 can be programmed to execute an algorithm designed to realize those actions in a proper manner without a need for interference from the user. On the other hand, it is possible to have a high degree of user involvement in the operation of the coffee machine 100 if so desired. In this respect, it is noted that it is possible that the coffee machine 100 is designed to enable the user to set one of various operation modes of the coffee machine 100, each of the operation modes involving a different degree of user involvement. For the purpose of enabling the user to interact with the controller 60, it is practical if the coffee machine 100 comprises a user interface, which user interface may come in any suitable form such as one or more buttons on the main unit 10, a touchscreen on the main unit 10, an app on a smartphone for wireless communication with the controller 60, etc. Interaction of the user with the controller 60 may not only be useful for initiating actions during operation of the coffee machine 100 to realize a coffee making process, but also for indicating characteristics of the coffee and thereby making the controller 60 set appropriate operation values of the pump 52 and/or the heater 42, for example.

It may especially be desirable to let the action of putting the portafilter 20 from the brewing position to the coffee receiving position be a user action. Among other things, this may provide the user with a barista feel and with a sense of being in control of initiating the coffee making process. In fact, if said action is a user action, indeed, the portafilter 20 can have a user interface functionality, namely in case said action is used to automatically activate the ground coffee supply unit 30. The same is applicable to the action of putting the portafilter 20 filled with ground coffee from the coffee receiving position to the brewing position if this a user action, namely in case said action is used to automatically activate closing and tamping system 70, the pump 52 and, optionally, the heater 42. If the action of putting the portafilter 20 filled with ground coffee from the coffee receiving position to the brewing position is a user action, indeed, it may be practical if the coffee machine 100 comprises an indicator such as a light that is operated by the controller 60 to indicate that the operation of the ground coffee supply unit 30 has ended. It is also possible that the fact that the grinder stops making sound when the operation of the ground coffee supply unit 30 ends is taken as an indication.

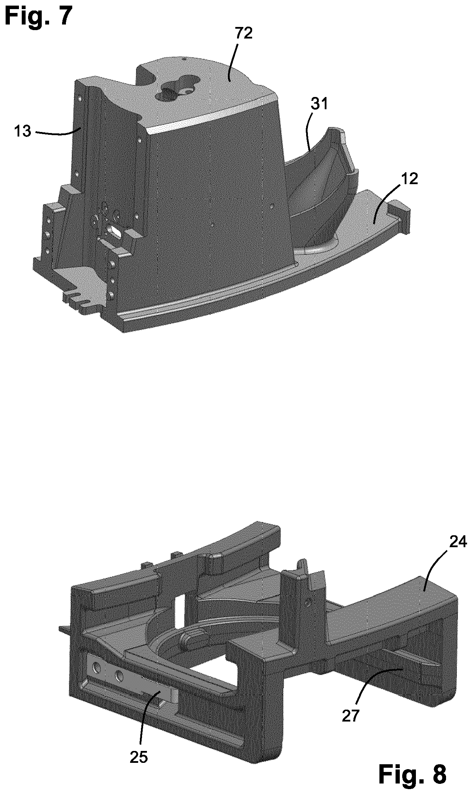

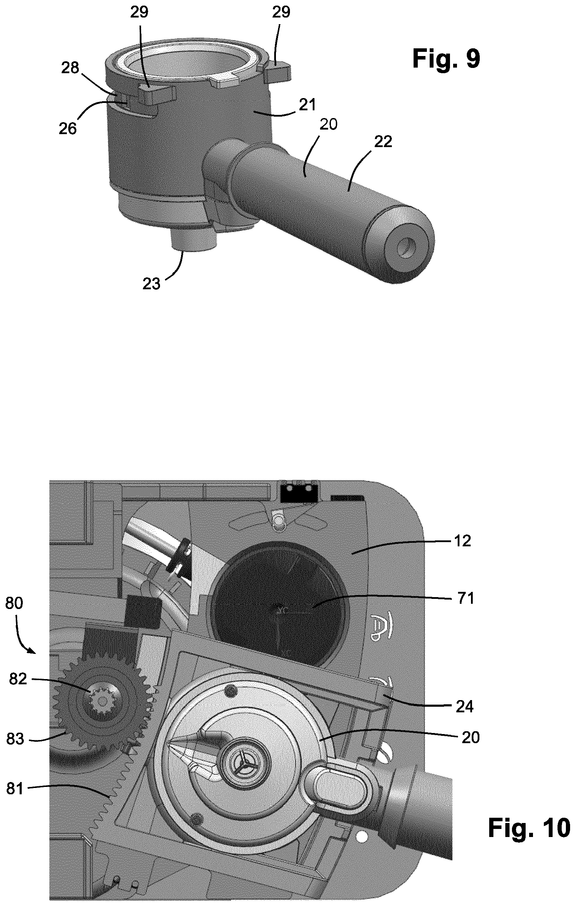

The action of displacing the portafilter 20 in the functional condition relative to the main housing 11 can easily be performed by the user and allows for intuitive control of the coffee machine 100 by the user. Complexity of design of the coffee machine 100 can be minimal, while the main unit 10 can be compact. In the present embodiment of the coffee machine 100, the portafilter 20 remains at the same level relative to the main housing 11 during displacement. With reference to figures 4-6, it is noted that use is made of a portafilter carrier 24 that is configured to accommodate and guide the portafilter 20 during displacement. The portafilter carrier 24 is slidably arranged on a guide track 12, which in the illustrated embodiment is curved. A component 13 of the coffee machine 100 including the curved guide track 12 is separately shown in figure 7, the portafilter carrier 24 is separately shown in figure 8, and the portafilter 20 is separately shown in figure 9. In the illustrated embodiment, the component 13 shown in figure 7 includes the holder 72 of the piston 71 of the closing and tamping system 70, and the ground coffee outlet 31 in the form of a chute.

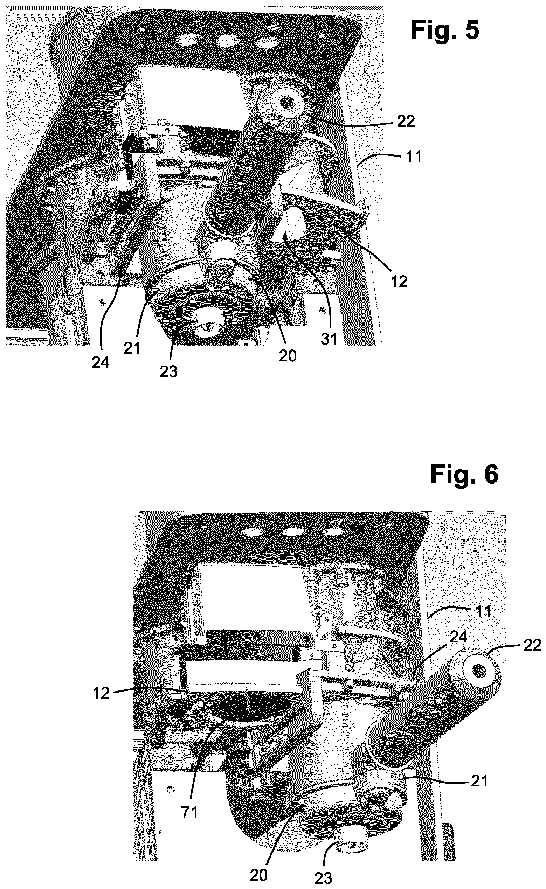

In figure 4, the portafilter carrier 24 is shown at a position for receiving the portafilter 20, i.e. at a position associated with the brewing position of the portafilter 20. In figure 5, the portafilter carrier 24 is shown at the same position, and the portafilter 20 as accommodated in the portafilter carrier 24 is shown as well. In figure 6, the portafilter 20 is shown at the coffee receiving position, and the portafilter carrier 24 is shown at a position associated with that particular position of the portafilter 20. As mentioned earlier, the portafilter carrier 24 is slidably arranged on guide track 12, and in the case that displacement of the portafilter 20 relative to the main housing 11 is done manually, the user only needs to exert a small force on the portafilter 20 at the position of the handle 22 to put both the portafilter 20 and the portafilter carrier 24 in motion in the direction as desired, wherein the exact path followed by the portafilter 20 and the portafilter carrier 24 is dictated by the shape of the guide track 12 which in the illustrated embodiment is curved. More specifically, the curved guide track 12 is curved about an axis of curvature (not shown in the figures). In the illustrated embodiment, the axis of curvature is substantially vertical in the normal, operational orientation of the main unit 10 as shown in figure 1.

The portafilter carrier 24 as shown is configured to enable the portafilter 20 to be put in place in the portafilter carrier 24 by means of a linear sliding movement. For the purpose of holding the portafilter 20 in the desired position, the portafilter carrier 24 comprises a locking mechanism in the form of a locking spring 25 that is arranged to engage on a recess 26 in the portafilter 20. Further, the portafilter carrier 24 is provided with opposite suspension ribs 27, and the portafilter 20 is provided with a groove 28 for receiving the suspension ribs 27 when the portafilter 20 is put in place in the portafilter carrier 24. The portafilter 20 further comprises two projections 29 for extra stability and reduction of tilting of the portafilter 20 under the influence of the pressures associated with the coffee brewing action. When the portafilter 20 is mounted in the portafilter carrier 24, the portafilter 20 hangs from the portafilter carrier 24, at a level underneath the curved guide track 12, as can be best seen in figures 5 and 6. In this way, a very stable positioning of the portafilter 20 is realized. The curved guide track 12 is provided with openings, wherein one of the openings serves to enable passage of ground coffee to the portafilter 20, and wherein the other of the openings serves to enable interaction of the portafilter 20 with the various components involved in closing the portafilter 20 so as to form the brew chamber, in tamping the ground coffee in the portafilter 20, and in supplying brew water to the portafilter 20.

Figure 10 serves to illustrate an option of having a driving mechanism 80 in the coffee machine 100 for automatically driving the portafilter 20 held in the portafilter carrier 24 from the coffee receiving position to the brewing position. In figure 10, the portafilter 20 is shown in the coffee receiving position. It can be seen that the portafilter carrier 24 is provided with a gear rack profile 81, and that a rotational damper 82 with a gear 83 is mounted in the main housing 11 and arranged so as to engage on the gear rack profile 81 of the portafilter carrier 24 through the gear 83. The driving mechanism 80 also comprises a spring (not visible in figure 10). The spring is arranged such that when the portafilter 20 is moved from the brewing position to the coffee receiving position, the spring becomes tensioned and thereby has the potential to invoke a movement of the portafilter 20 back to the brewing position. Advantageously, the coffee machine 100 may comprise a holding mechanism for holding the portafilter 20 in the coffee receiving position, so that the portafilter 20 can be kept at the coffee receiving position as long as necessary, i.e. during the time that the coffee supply unit 30 is operated, despite the tension force of the spring. As soon as the holding mechanism is released, the tension spring acts to move the portafilter 20 back to the brewing position. In the process, the portafilter 20 is guided by means of the portafilter carrier 24 running on the curved guide track 12. Further, the rotational damper 82 acts to dampen the movement, so that a displacement speed of the portafilter 20 is controlled and a sudden stop of the portafilter 20 at the brewing position is avoided. Thus, spillover of ground coffee and/or an uneven distribution of the ground coffee in the portafilter 20 is avoided.

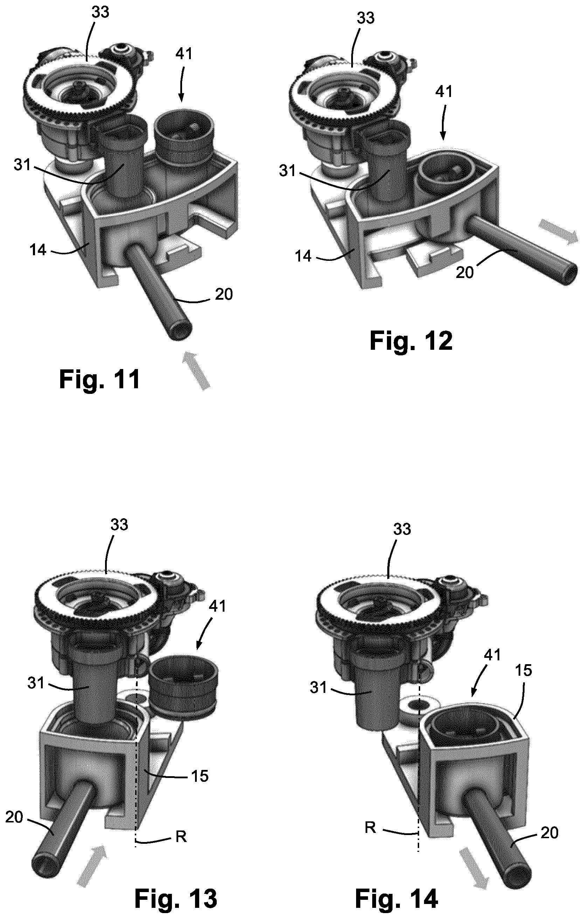

The curved guide track 12 is one feasible example of a main component of a guiding arrangement for guiding displacement of the portafilter 20 along a guide path. In figures 11 and 12, a first alternative example is shown, and in figures 13 and 14, a second alternative example is shown, wherein in both cases, the portafilter carrier 24 is omitted, and wherein in both cases, the guide path is again a curved guide path, and wherein displacement of the portafilter 20 along the guide path can be done manually or by means of a suitable driving mechanism. In the first alternative example, the guiding arrangement comprises a box-like frame 14 configured to partially enclose the portafilter 20 and to guide the portafilter 20 along a curved guide path when the portafilter 20 is displaced relative to the fame 14 (inside the frame 14). In figure 11, it is indicated by an arrow how the portafilter 20 can be inserted in the frame 14, at the coffee receiving position, and in figure 12, it is indicated by an arrow how the portafilter 20 can be removed from the frame 14, at the brewing position.

In the second alternative example, the guiding arrangement comprises a cradle 15 that is rotatable about a rotation axis R. The sizing of the cradle 15 is chosen such that the portafilter 20 cannot be moved inside the cradle apart from a movement aimed at inserting the portafilter 20 in the cradle 15 as indicated by an arrow in figure 13 and a movement aimed at removing the portafilter 20 from the cradle as indicated by an arrow in figure 14. Once the portafilter 20 is inserted in the cradle 15, displacement of the portafilter 20 between the coffee receiving position and the brewing position along a curved guide path is realized by rotating the cradle 15 about the rotation axis R over an appropriate rotation angle.

It follows from the foregoing that a coffee machine 100 is provided that is of the hybrid type, i.e. of the type comprising an internal grinder 33 and a brew chamber in the form of a portafilter 20 that is removably mounted to the main unit 10 and is emptied externally by the user after each brew cycle, as part of the normal operation of the coffee machine 100. According to an aspect of the coffee machine 100, when the portafilter 20 is in the functional condition, displacement of the portafilter 20 between a coffee receiving position and a brewing position takes place along a guide path. The guide path may be substantially horizontal. The guide path may be curved. The guide path may be defined by a rail-like component 12, for example, to mention one practical option. Displacing the portafilter 20 along the guide path may be like moving the portafilter 20 in a sideward direction relative to a direction in which the portafilter 20 is moved for the purpose of combining the portafilter 20 with the main unit 10 and a direction in which the portafilter 20 is moved for the purpose of removing the portafilter 20 from the main unit 10, respectively. This allows for easy and intuitive handling of the portafilter 20 by the user, and also for a practical design of the coffee machine 100 in which successive actions of supplying ground coffee to the portafilter 20 and brewing coffee in the portafilter 20 in closed condition can take place in reliable and safe fashion.

It is possible to have an embodiment of the coffee machine 100 in which a coffee making process involves successive steps of combining the portafilter 20 with the main unit 10 at a brewing position, manually moving the portafilter 20 to a coffee receiving position where an action of supplying ground coffee to the portafilter 20 is automatically initiated upon arrival of the portafilter 20, and automatically moving the portafilter 20 back to the brewing position where actions of closing the portafilter 20 to form a brew chamber, tamping the ground coffee in the portafilter 20 and supplying water in a pressurized and possibly heated condition to the brew chamber are automatically initiated upon arrival of the portafilter. In another feasible embodiment of the coffee machine 100, the portafilter 20 is combined with the main unit 10 at the coffee receiving position and is only displaced one time, namely from the coffee receiving position to the brewing position. In any case, after the coffee making process has taken place, the portafilter 20 is to be manually removed from the main unit 10 for purposes of emptying the portafilter and possibly also cleaning it.

It will be clear to a person skilled in the art that the scope of the invention is not limited to the examples discussed in the foregoing, but that several amendments and modifications thereof are possible without deviating from the scope of the invention as defined in the attached claims. It is intended that the invention be construed as including all such amendments and modifications insofar they come within the scope of the claims or the equivalents thereof. While the invention has been illustrated and described in detail in the figures and the description, such illustration and description are to be considered illustrative or exemplary only, and not restrictive. The invention is not limited to the disclosed embodiments. The drawings are schematic, wherein details that are not required for understanding the invention may have been omitted, and not necessarily to scale.

Variations to the disclosed embodiments can be understood and effected by a person skilled in the art in practicing the claimed invention, from a study of the figures, the description and the attached claims. In the claims, the word "comprising" does not exclude other steps or elements, and the indefinite article "a" or "an" does not exclude a plurality. Any reference signs in the claims should not be construed as limiting the scope of the invention.

Elements and aspects discussed for or in relation with a particular embodiment may be suitably combined with elements and aspects of other embodiments, unless explicitly stated otherwise. Thus, the mere fact that certain measures are recited in mutually different dependent claims does not indicate that a combination of these measures cannot be used to advantage.

Aspects of the invention are summarized as follows. A coffee machine 100 is provided, comprising a main unit 10 and a portafilter 20, wherein the portafilter 20 in a functional condition is removably mounted to the main unit 10 and is emptied externally by a user as part of the normal operation of the coffee machine 100. When the portafilter 20 is in the functional condition, displacement of the portafilter 20 between a coffee receiving position and a brewing position takes place along a guide path, e.g. a horizontal and/or curved guide path. Such a guide path may be defined by a rail-like component 12. Making use of a portafilter carrier 24 for receiving and accommodating the portafilter 20 in the functional condition is a way of achieving that actions of mounting the portafilter 20 to the main unit 10 and removing the portafilter 20 from the main unit 10 require no more than a linear movement of the portafilter 20 towards the main unit 10 and away from the main unit 10, respectively.

## Claims

1. A coffee machine (100), comprising:
a main unit (10) comprising a main housing (11) accommodating a ground coffee supply unit (30) including a ground coffee outlet (31) and a brew water supply unit (40) including a brew water outlet (41); and
a portafilter (20) configured to be put to a functional condition in which the portafilter (20) is removably combined with the main unit (10);
wherein:
the portafilter (20) in the functional condition is displaceable relative to the main housing (11);
with the portafilter (20) at a first position relative to the main housing (11), the portafilter (20) and the ground coffee outlet (31) are at a relative position at which the portafilter (20) is enabled to receive ground coffee from the ground coffee outlet (31);
with the portafilter (20) at a second position relative to the main housing (11), the portafilter (20) and the brew water outlet (41) are at a relative position at which the portafilter (20) is enabled to receive brew water from the brew water outlet (41); and
the coffee machine (100) further comprises a guiding arrangement (12, 14, 15) that is configured to guide displacement of the portafilter (20) between the first position relative to the main housing (11) and the second position relative to the main housing (11) along a guide path.

2. The coffee machine (100) as claimed in claim 1, wherein the guide path is substantially horizontal in a normal, operational orientation of the main unit (10).

3. The coffee machine (100) as claimed in claim 1 or 2, wherein the guide path is curved, wherein optionally the axis of curvature of the curved guide path is substantially vertical in a normal, operational orientation of the main unit (10).

4. The coffee machine (100) as claimed in any of claims 1-3, wherein the guiding arrangement (12, 14, 15) comprises a rail-like component (12) defining the guide path.

5. The coffee machine (100) as claimed in any of claims 1-4, comprising a portafilter carrier (24) configured to receive and accommodate the portafilter (20) in the functional condition.

6. The coffee machine (100) as claimed in claim 5 insofar as dependent on claim 4, wherein the portafilter carrier (24) is arranged to run on the rail-like component (12).

7. The coffee machine (100) as claimed in claim 5 or 6, wherein the portafilter carrier (24) is configured to enable the portafilter (20) to be put in place in the portafilter carrier (24) by means of a linear sliding movement.

8. The coffee machine (100) as claimed in any of claims 1-7, wherein the portafilter carrier (24) comprises a releasable locking mechanism (25) configured to lock the portafilter (20) in place on the portafilter carrier (24).

9. The coffee machine (100) as claimed in any of claims 1-8, wherein the main unit (10) is configured to receive the portafilter (20) at the second position relative to the main housing (11) in the instance that the portafilter (20) is put to the functional condition.

10. The coffee machine (100) as claimed in any of claims 1-9, comprising a holding mechanism that is actuable under the influence of the portafilter (20) being put to the first position relative to the main housing (11) to hold the portafilter (20) at the first position relative to the main housing (11).

11. The coffee machine (100) as claimed in any of claims 1-10, comprising at least one of an arrangement that is actuable under the influence of the portafilter (20) being put to the first position relative to the main housing (11) to initiate supply of ground coffee to the portafilter (20) through the ground coffee outlet (31) and an arrangement that is actuable under the influence of the portafilter (20) being put to the second position relative to the main housing (11) to initiate supply of brew water to the portafilter (20) through the brew water outlet (41).

12. The coffee machine (100) as claimed in any of claims 1-11, comprising a driving mechanism (80) configured to bring about displacement of the portafilter (20) from the first position relative to the main housing (11) to the second position relative to the main housing (11).

13. The coffee machine (100) as claimed in claim 12, wherein the driving mechanism (80) comprises a biasing mechanism that is actuable under the influence of the portafilter (20) being displaced from the second position relative to the main housing (11) to the first position relative to the main housing (11).

14. The coffee machine (100) as claimed in any of claims 1-13, comprising a closing and tamping system (70) configured to close the portafilter (20) and to provide tamping of ground coffee contained in the portafilter (20), and arranged to interact with the portafilter (20) when the portafilter (20) is displaced from the first position relative to the main housing (11) to the second position relative to the main housing (11).

15. The coffee machine (100) as claimed in any of claims 1-14, wherein the ground coffee supply unit (30) comprises a grinder (33).
